Europäisches Patentamt

(19) European Patent Office

Office européen des brevets

(11) Numéro de publication: **0 122 843**
**B1**

(12) **FASCICULE DE BREVET EUROPEEN**

(45) Date de publication du fascicule du brevet:
16.09.87

(51) Int. Cl.⁴: **G 06 F 7/544**

(21) Numéro de dépôt: **84400658.5**

(22) Date de dépôt: **03.04.84**

(54) Intégrateur modulaire.

(30) Priorité: **06.04.83 FR 8305601**

(43) Date de publication de la demande:
**24.10.84 Bulletin 84/43**

(45) Mention de la délivrance du brevet:
**16.09.87 Bulletin 87/38**

(84) Etats contractants désignés:
**DE GB IT NL**

(56) Documents cités:
**GB - A - 2 015 784**
**US - A - 4 122 527**

**DE INGENIEUR, vol. 83, no. 44, 5 novembre 1971, pages ET 155-156, La Haye, NL; R.M.M. OBERMAN:
"Programmed accumulator"**

(73) Titulaire: **THOMSON-CSF, 173, Boulevard Haussmann, F-75379 Paris Cedex 08 (FR)**

(72) Inventeur: **Muller, Bernard-Pierre, THOMSON-CSF SCPI 173, bld Haussmann, F-75379 Paris Cedex 08 (FR)**
Inventeur: **Charlec, Jean-Paul, THOMSON-CSF SCPI 173, bld Haussmann, F-75379 Paris Cedex 08 (FR)**

(74) Mandataire: **Benoit, Monique et al, THOMSON-CSF SCPI 19, avenue de Messine, F-75008 Paris (FR)**

ACTORUM AG

## Description

La présente invention se rapporte aux intégrateurs modulaires qui permettent d'effectuer la sommation d'une série de nombres binaires selon une règle déterminée, pour obtenir par exemple l'intégrale de la fonction représentée par cette série de nombres.

Il est connu du brevet GB-A-2 015 784 de réaliser de multiplieurs susceptibles d'effectuer l'accumulation des produits exécutés.

D'autre part, la demande de brevet EP-A-0 112 768 déposée par la demanderesse le 23 décembre 1982, on a décrit un opérateur élémentaire susceptible d'être intégré dans un circuit prédiffusé du commerce et qui fonctionne en utilisant l'algorithme de Booth.

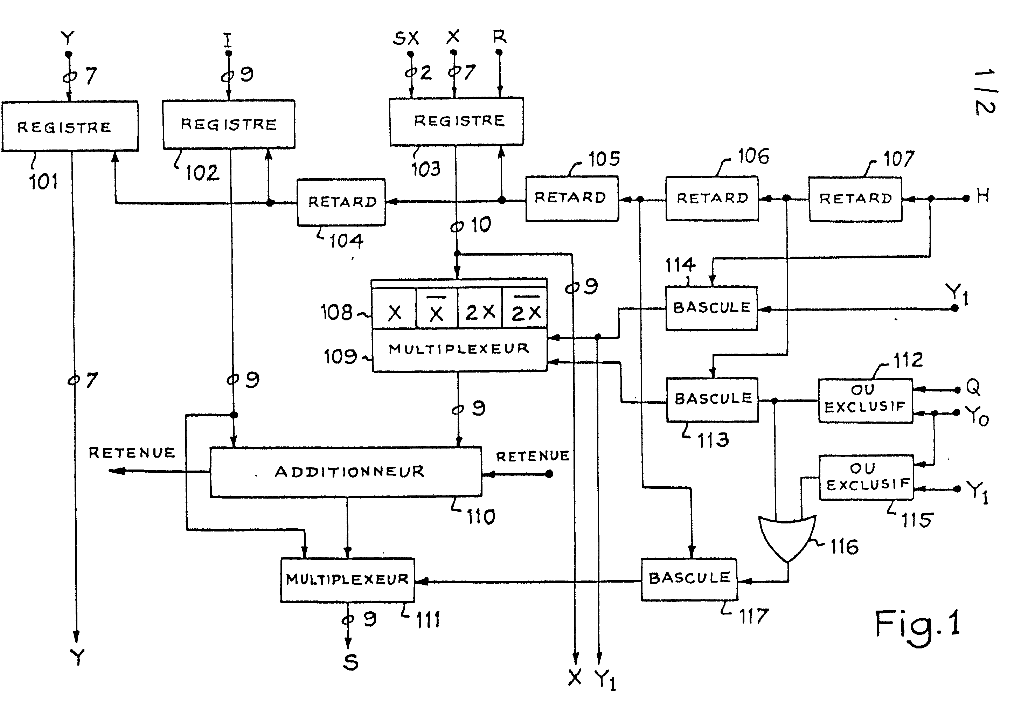

Un tel opérateur élémentaire représenté sur la figure 1 permet de réaliser une multiplication partielle entre un nombre X comportant sept bits (dont le signe) et deux bits $Y_1$ et $Y_0$ d'un nombre Y, soit une multiplication 7 × 2 avec conservation du signe.

L'opérateur de la figure 1 comprend trois registres d'entrée 101, 102, 103 qui permettent de recevoir les données en entrée.

Le registre 101 comprend sept cases qui permettent de mémoriser notamment les bits de poids forts de Y non utilisés dans l'opérateur. Ce registre est muni d'une sortie sur laquelle on trouve une recopie de l'entrée après le pas d'horloge H appliqué au registre par quatre dispositifs de retard 104 à 107 en série destinés à améliorer le comportement du circuit.

Le registre 102 comprend neuf cases qui permettent de mémoriser les neuf bits de poids forts d'un résultat intermédiare I. Le registre 102 est aussi muni d'une sortie qui recopie son entrée sous la commande de H (disponible en sortie du dispositif à retard 104).

Le registre 103 comprend dix cases qui permettent de mémoriser les sept bits du nombre X, ainsi que trois bits supplémentaires. Ces bits supplémentaires comprennent un bit R de poids faible, dit de recoupe. Les deux autres bits supplémentaires sont deux bits de poids forts qui recopient le bit de signe de X et permettent lors des opérations de garder ce signe. En effet l'opération 2X (ou −2X) se traduit par un décalage d'un bit à gauche, et il est de plus nécessaire de prévoir le cas où l'addition des signes délivre une retenue et donc nécessite encore un autre bit à gauche. Ce registre 103 est également muni d'une sortie qui recopie son entrée sous la commande de H en sortie du dispositif à retard 105.

Cette sortie du registre 103 est appliquée à un dispositif de calcul 108 suivi d'un multiplexeur 109. Ce dispositif de calcul effectue sur l'ensemble des dix bits les opérations X (transfert direct), $\overline{X}$ (complémentation bit à bit de X), 2X (décalage d'un bit à gauche), et $\overline{2X}$ (complémentation suivie d'un décalage à gauche). Le multiplexeur 109 sélectionne le résultat de l'une de ces quatre opérations sous la commande de deux signaux binaires qui représentent respectivement $Y_1$ et un signal B = $(Y_0 \oplus Q)$. Ces signaux sont obtenus d'une manière décrite plus loin. Le multiplexeur est conçu pour ne sélectionner que les neuf bits de poids forts en éliminant ainsi le bit de recoupe qui a servi dans la multiplication par 2 et qui n'est plus utile ensuite.

Le nombre en sortie du multiplexeur 109 est additionné à I, disponible en sortie du registre 102, dans un additionneur de neuf bits 110. Cet additionneur est muni d'une entrée et d'une sortie de retenue. Pour l'usage de l'opérateur en multiplieur 7 × 2 cascadable on applique, par câblage externe, le bit $Y_1$ sur l'entrée de retenue de l'additionneur. En effet, comme on le connaît de l'algorithme de Booth, l'addition de −X et −2X est à faire seulement lorsque $Y_1 = 1$. Comme on dispose de $\overline{X}$ et $\overline{2X}$, en sortie du multiplexeur 109 dans ce cas, le fait de rajouter 1 par l'entrée de retenue donne bien −X et −2X en complément à 2, qui est le code utilisé.

La sortie de l'additionneur, ainsi que la sortie du registre 102, sont appliqués à un multiplexeur 111 qui sélectionne l'un de ces deux signaux sous la commande d'un signal A = $(Y_0 \oplus Q) \cup (Y_1 \oplus Y_0)$, obtenu de la manière expliquée plus loin, et délivre le signal $S_j$.

Les deux bits Q et $Y_0$ sont appliqués à une porte OU-exclusif 112 qui délivre le signal B. Ce signal B est mémorisé dans une bascule maître-esclave 113 pour être appliqué au multiplexeur 109. Cette bascule est commandée par l'horloge H en sortie du dispositif à retard 107.

Le bit $Y_1$ en provenance de l'étage précédent est mémorisé dans une bascule maître-esclave 114 pour être appliqué au multiplexeur 109. Cette bascule est commandée par l'horloge H directement.

Les deux bits $Y_0$ et $Y_1$ sont également appliqués à une porte OU-exclusif 115 dont la sortie est connectée à une porte OU 116. L'autre entrée de cette porte reçoit le signal B, et sa sortie délivre le signal A. Ce signal A est mémorisé dans une bascule maître-esclave 117 pour être appliqué au multiplexeur 111. Cette bascule est commandée par l'horloge H en sortie du dispositif à retard 106.

Les signaux X et $Y_1$, nécessaires pour l'étage suivant, sont disponibles en sortie du registre 103 et de la bascule 114. Il en est de même pour les signaux $Y_3$ et $Y_2$ (faisant partie de Y et sortant de 101) et S (sortie de 111). Pour simplifier la figure on a représenté X sur neuf bits, ce qui inclut les deux bits de signe SX. Par contre le bit de recoupe R n'est pas disponible, parce qu'il n'y a pas d'utilité à le transmettre.

Les dispositifs à retard 104 à 107 tiennent compte des temps de réponse des circuits auxquels sont appliqués les signaux. Ceci permet, en remettant les signaux en phase, d'améliorer le comportement dynamique et le comportement en fréquence de l'opérateur élémentaire. Plus précisément en admettant un retard volontaire sur chacune des opérations des circuits, on les effectue toutes ensembles lorsque tous les signaux sont disponibles au même moment, et la vitesse de calcul après ce retard volontaire est alors bien plus grande, ce qui permet d'augmenter considérablement le débit.

Pour intégrer m signaux comportant au moins p bits $M_0$ à $M_{p-1}$ sous la commande d'un signal formé de deux bits $Y_1$ et $Y_0$, l'invention propose un dispositif principalement caractérisé en ce qu'il comprend au moins un premier opérateur élémentaire ayant un premier registre RI pour recevoir le signal à intégrer, un deuxième registre X pour recevoir un signal de recyclage de n bits maximum et un bit de recoupe mis à zéro et délivrer le signal intégré formé de n bits $I_0$ à $I_{n-1}$, des circuits de décodage D pour recevoir le signal de commande et un bit supplémentaire Q mis à zéro, un additionneur muni d'un entrée de retenue pour recevoir le bit $Y_1$ de commande et d'une sortie de retenue, et un circuit S pour délivrer le signal de recyclage obtenu selon l'algorithme de Booth entre le signal à intégrer, le signal de recyclage obtenu lors du pas d'horloge précédent, et le signal de commande avec le bit supplémentaire, n devant être $\leqslant$ p + partie entière ($\log_2$ m).

D'autres particularités et avantages de l'invention apparaîtront clairement dans la description suivante faite en regard des figures annexées qui représentent:
- la figure 1, le schéma d'un opérateur connu de la demande de brevet EP-A-0 112 768;
- la figure 2, le schéma d'un intégrateur utilisant quatre de ces opérateurs.

Le résultat partiel du traitement numérique de signaux, de radar notamment, est par exemple disponible sous la forme d'une série de nombres de trente-deux bits $M_0$ à $M_{31}$ délivrés par un multiplieur rapide formé de huit étages de deux opérateurs tels que décrits plus haut.

Pour intégrer ce flux de données, on est par exemple amené à en faire la somme au fur et à mesure que ces nombres se présentent. Le cas échéant il convient aussi de soustraire ces nombres au résultat précédent, en fonction du traitement à appliquer.

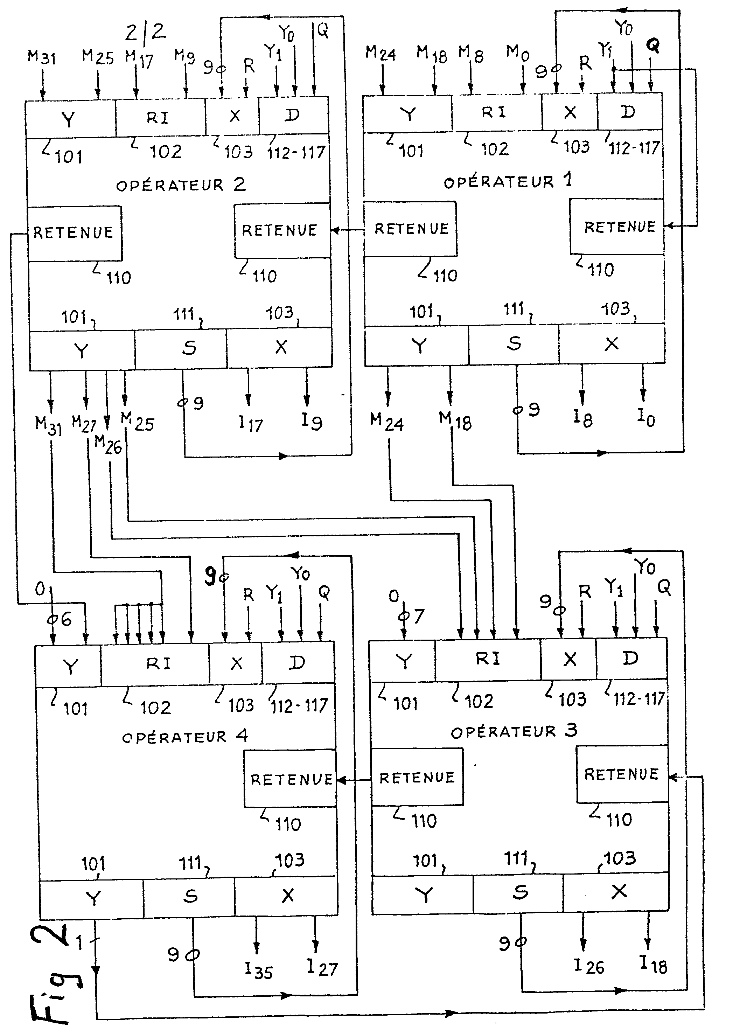

Pour cela l'invention utilise quatre opérateurs élémentaires 1 à 4, du type décrit plus haut, associés selon le schéma de la figure 2. Un tel système présente l'avantage d'être aussi rapide qu'un multiplieur en cascade formé à partir des mêmes opérateurs, et de pouvoir donc être connecté directement en sortie d'un multiplieur de ce type.

Les bits $M_0$ à $M_8$ et $M_9$ à $M_{17}$ sont appliqués aux entrées des registres RI (102 sur la figure 1) des opérateurs 1 et 2, et les bits $M_{18}$ à $M_{24}$ et $M_{25}$ à $M_{31}$ aux entrées des registres Y (101 sur la figure 1) de ces mêmes opérateurs.

Lors d'une initialisation du système, on mémorise seulement ces bits dans les opérateurs 1 et 2 lors du premier pas d'horloge. Pour les registres Y c'est toujours le cas, mais pour les registres RI il faut ne rien additionner. Ceci s'obtient en appliquant sur les entrées $Y_1$ $Y_0$ Q des circuits de décodage D (112–117 sur la figure 1) trois bits zéro, $Y_1$ étant par ailleurs relié à l'entrée de retenue de l'opérateur 1. Les bits $M_0$ à $M_8$ et $M_9$ à $M_{17}$ se retrouvent donc sur les sorties des circuits S (111 sur la figure 1) des opérateurs 1 et 2, et les bits $M_{18}$ à $M_{31}$ en sortie des registres Y.

Ces sorties des circuits S sont rebouclées respectivement sur les entrées des registres X (103 sur la figure 1) de ces mêmes opérateurs. Les entrées R des bits de recoupe sont par ailleurs maintenues à zéro.

Ainsi au deuxième pas d'horloge les dix-huit bits de poids faibles du mot suivant que l'on veut additionner (ou éventuellement soustraire), au mot pris en compte au premier pas sont appliqués sur les registres RI des opérateurs 1 et 2. Pour obtenir une addition on applique un mot 010 sur les trois entrées du circuit D, pour obtenir une soustraction un mot 110. On aura donc cette fois-ci sur les opérateurs 1 et 2 en sortie des registres S les dix-huit bits de poids faibles $I_0$ à $I_{17}$ de la somme désirée, en sortie des registres Y les quatorze bits de poids forts $M_{18}$ à $M_{31}$ du deuxième mot, et en sortie des registres X les dix-huit bits de poids faibles $M_1$ à $M_{17}$ du premier mot (puisque le premier coup d'horloge correspondait à une simple transmission du premier mot).

On remarque que l'entrée Q reçoit dans tous les cas un bit zéro, et que par ailleurs pour assurer la continuité des calculs la sortie de retenue du premier opérateur est reliée à l'entrée de retenue du second.

Au troisième pas d'horloge les dix-huit bits de poids faibles du troisième mot à prendre en compte sont additionnés aux dix-huit bits de poids faibles de la première somme, qui ont été rebouclés au deuxième coup d'horloge sur les entrées du registre X, et qui se retrouvent lors de ce troisième coup d'horloge sur les sorties des registres X des deux premiers opérateurs, où ils constituent les dix-huit bits de poids faibles $I_0$ à $I_{17}$ du signal intégré désiré.

On remarque que l'on aurait avec ces deux seuls opérateurs un sommateur pouvant traiter des mots jusque dis-huit bits, mais qui serait limité par des problèmes de débordement dans les poids forts. Il serait de même possible de réaliser avec un seul opérateur un sommateur sur neuf bits.

Les quatorze bits de poids forts du premier mot, qui sont disponibles au premier pas d'horloge sur les sorties des registres Y des opérateurs 1 et 2, sont appliqués, avec cadrage à droite, sur les entrées des registres RI des opérateurs 3 et 4, c'est-à-dire $M_{18}$ à $M_{26}$ sur RI de l'opérateur 3, et $M_{27}$ à $M_{31}$ sur RI de l'opérateur 4. Le bit de poids fort $M_{31}$ est répété sur les quatre entrées ainsi disponibles à gauche sur le registre RI de l'opérateur 4.

Les entrées des circuits D de ces opérateurs 3 et 4 reçoivent les mêmes bits que celles des deux premiers avec un retard d'un pas d'horloge, et ces bits de poids forts se retrouvent ainsi sur les sorties des circuits S des opérateurs 3 et 4, qui sont rebouclées sur les entrées correspondantes des registres X de ceux-ci.

Ainsi donc les opérateurs 3 et 4 fonctionnent sur les quatorze bits de poids forts des mots à prendre en compte de la même manière que les opérateurs 1 et 2 sur les dix-huit de poids faibles de ces mots, mais avec un pas d'horloge de retard, dû à la transmission des bits de poids forts par les registres Y des opérateurs 1 et 2.

Pour assurer la continuité des calculs, et prendre en compte ce temps de retard, la retenue sortante de l'opérateur 2 transite par l'un des étages du registre Y de l'un des opérateurs 3 ou 4 (4 sur la figure 2) avant d'être appliquée à l'entrée de retenue de l'opérateur 3. Les autres entrées de ces registres Y sont inutilisées et maintenues par exemple à zéro. De plus la sortie de retenue de l'opérateur 3 est appliquée à l'entrée de retenue de l'opérateur 4.

On obtient donc au quatrième pas d'horloge, sur les sorties des registres X des opérateurs 3 et 4, les dix-huit bits de poids forts $I_{18}$ à $I_{35}$ du signal intégré désiré, qui viennent compléter les dix-huit bits de poids faibles $I_0$ à $I_{17}$, obtenus au troisième pas d'horloge, lesquels ont été remplacés lors de ce quatrième pas d'horloge par les dix-huit bits de poids faibles de la valeur suivante du signal intégré, et seront complétés au cinquième pas d'horloge par les dix-huit bits de poids forts, et ainsi de suite. Sur ces trente-six bits ainsi obtenus, les quatre de poids les plus forts permettent de réaliser seize cycles d'intégration.

**Revendications**

1. Intégrateur modulaire pour intégrer m signaux comportant au moins p bits $M_0$ à $M_{p-1}$ sous la commande d'un signal formé de deux bits $Y_1$ et $Y_0$, caractérisé en ce qu'il comprend au moins un premier opérateur élémentaire (1) ayant un premier registre RI (102) pour recevoir les signaux successifs à intégrer, un deuxième registre X (103) pour recevoir un signal de recyclage de n bits (n ⩽ p + partie entière (log₂ m) et délivrer le signal intégré formé de n bits $I_0$ à $I_{n-1}$, des circuits de décodage D (112–117) pour recevoir le signal de commande, un additionneur (110) muni d'une entrée de retenue pour recevoir le bit $Y_1$ de commande et d'une sortie de retenue, et un circuit S (111) pour délivrer le signal de recyclage obtenu selon l'algorithme de Booth entre le signal à intégrer, le signal de recyclage obtenu au moyen du signal à intégrer d'une part et du signal de recyclage obtenu lors du pas d'horloge précédent d'autre part, ces deux signaux étaient combinés sous le contrôle du signal de commande ($Y_1$, $Y_0$).

2. Intégrateur selon la revendication 1, caractérisé en ce qu'il comprend en outre un deuxième opérateur (2) identique au premier dont le circuit S (111) est bouclé sur le registre X (103) et dont les circuits D (112–117) reçoivent les mêmes signaux de commande que le premier, que le signal à intégrer comporte en outre n bits supplémentaires $M_p$ à $M_{p+n-1}$ appliqués sur l'entrée du registre RI (102) de ce deuxième opérateur, que l'entrée de retenue du deuxième opérateur (2) est reliée à la sortie de retenue du premier opérateur (1), et que le signal intégré comprend en outre n bits supplémentaires $I_n$ à $I_{2n-1}$ délivrés en sortie du registre X (103) du deuxième opérateur (2).

3. Intégrateur selon la revendication 2, caractérisé en ce qu'il comprend en outre un troisième et un quatrième opérateurs (3, 4) identiques au premier dont les circuits S (111) sont bouclés sur les registres X (103) et dont les circuits D (112–117) reçoivent les mêmes signaux de commande que les deux premiers opérateurs (1, 2), que chacun des opérateurs comprend en outre un troisième registre Y (101), que les registres Y des premier et deuxième opérateurs permettent de recevoir et de délivrer avec un retard d'un pas d'horloge respectivement n–2 bits $M_{2n}$ à $M_{3n-3}$ et $M_{3n-2}$ à $M_{4n-5}$ supplémentaires du signal à intégrer, que les bits délivrés par ces registres Y sont appliqués aux registres RI des troisième et quatrième opérateurs (3, 4) avec calage à droite et quadruple recopie du bit de poids fort, que la sortie de retenue du second opérateur (2) est appliquée à l'une des entrées de l'un des registres Y des troisième et quatrième opérateurs (3, 4) la sortie dudit registre Y dudit quatrième opérateur (4) est appliquée à l'entrée de retenue (110) du troisième opérateur (3), que l'entrée de retenue du quatrième opérateur (4) est reliée à la sortie de retenue du troisième opérateur (3), et que le signal intégré comprend en outre 2n bits supplémentaires $I_{2n}$ à $I_{3n-1}$ et $I_{3n}$ à $I_{4n-1}$ délivrés au pas d'horloge suivant respectivement en sortie des registres X (103) des troisième et quatrième opérateurs (3, 4).

4. Intégrateur selon l'une quelconque des revendications 1 à 3, caractérisé en ce que n = 9.

**Patentansprüche**

1. Modular aufgebauter Integrator zur Integration von mindestens p Bits $M_0$ bis $M_{p-1}$ enthaltenden Signalen unter Steuerung durch ein von zwei Bits $Y_1$ und $Y_0$ gebildeten Signal, dadurch gekennzeichnet, dass er mindestens einen ersten Elementaroperator (1) aufweist, der ein erstes Register RI (102) zum Empfang der aufeinanderfolgenden zu integrierenden Signalen, ein zweites Register X (103) zum Empfang eines aus n Bits (n ⩽ p+ ganzzahliger Teil von [log₂m]) bestehenden Rezykliersignals und zur Ausgabe des aus n Bits $I_0$ bis $I_{n-1}$ gebildeten integrierten Signals, Dekodierkreise D (112 bis 117) zum Empfang des Steuersignals, einen Addierer (110) mit einem Übertragseingang, um das Steuerbit $Y_1$ zu empfangen, und mit einem Übertragsausgang, und einen Kreis S (111) enthält, um das Rezykliersignal zu liefern, das nach dem Algorithmus von Booth zwischen dem zu integrierenden Signal, dem von dem zu integrierenden Signal abgeleiteten Rezykliersignal einerseits und dem während des vorhergehenden Taktschritts vorliegenden Rezykliersignals andererseits erhalten wird, wobei diese beiden Signale unter Steuerung durch das Steuersignal ($Y_1$, $Y_0$) kombiniert werden.

2. Integrator nach Anspruch 1, dadurch gekennzeichnet, dass er weiter einen zweiten, mit dem ersten Operator identischen Operator (2) aufweist, dessen Kreis S (111) auf das Register X (103) zurückgeschleift ist und dessen Kreise D (112 bis 117) dieselben Steuersignale wie der erste Operator zugeführt erhalten, dass das zu integrierende Signal ausserdem n zusätzliche Bits $M_p$ bis $M_{p+n-1}$ aufweist, die an den Eingang des Registers RI (102) dieses zweiten Operators angelegt sind, dass der Übertragseingang des zweiten Operators (2) an den Übertragsausgang des ersten Operators (1) angeschlossen ist und dass das integrierte Signal ausserdem n zusätzliche Bits $I_n$ bis $I_{2n-1}$ enthält, die am Ausgang des Registers X (103) des zweiten Operators (2) ausgegeben werden.

3. Integrator nach Anspruch 2, dadurch gekennzeichnet, dass er ausserdem einen dritten und einen vierten Operator (3, 4) aufweist, die dem ersten Operator gleichen und deren Kreise S (111) an die Register X (103) rückgeschleift sind und deren Kreise D (112 bis 117) dieselben Steuersignale wie die beiden ersten Operatoren (1, 2) empfangen, dass jeder der Operatoren ausserdem ein drittes Register Y (101) aufweist, dass die Register Y des ersten und zweiten Operators n–2 zusätzliche Bits $M_{2n}$ bis $M_{3n-3}$ und $M_{3n-2}$ bis $M_{4n-5}$ des zu integrierenden Signals zu empfangen und mit einer jeweiligen Verzögerung eines Taktschritts auszugeben vermögen, dass die von diesen Registern Y gelieferten Bits an die Register RI des dritten und des vierten Operators (3, 4) rechtsbündig und mit vierfacher Kopierung des höchstwertigen Bits angelegt werden, dass der Übertragungsausgang des zweiten Operators (2) an einen der Eingänge eines der Register Y des dritten und vierten Operators (3, 4) angelegt sind, dass der Ausgang des Registers Y des vierten Operators (4) mit dem Übertragseingang (110) des dritten Operators verbunden ist, dass der Übertragungseingang des vierten Operators (4) an den Übertragsausgang des dritten Operators (3) angeschlossen ist, und dass das integrierte Signal ausserdem 2n zusätzliche Bits $I_{2n}$ bis $I_{3n-1}$ und $I_{3n}$ bis $I_{4n-1}$ umfasst, die im jeweils nächstfolgenden Taktschritt vom Ausgang der Register X (103) des dritten und des vierten Operators (3, 4) geliefert werden.

4. Integrator nach einem beliebigen der Ansprüche 1 bis 3, dadurch gekennzeichnet, dass n = 9 ist.

**Claims**

1. A modular integrator capable of integrating m signals, comprising at least p bits $M_0$ to $M_{p-1}$ under the control of a signal constituted by two bits $Y_1$ and $Y_0$, characterized in that it comprises at least one elementary operator (1) having a first register RI (102) for receiving the successive signals to be integrated, a second register X (103) for receiving a recycling signal including n bits (n ⩽ p+ integer part of $[\log_2 m]$) and for delivering the integrated signal constituted by n bits $I_0$ to $I_{n-1}$, decoding circuits D (112 to 117) for receiving the control signal, an adder (110) equipped with a carry-over input for receiving the control bits Y1 and with a carry-over output, and a circuit S (111) for delivering the recycling signal obtained according to the Booth algorithm between the signal to be integrated, the recycling signal obtained by means of the signal to be integrated on the one hand and of the recycling signal obtained during the preceding clock period on the other hand, these two signals being combined under the control of the control signal ($Y_1$, $Y_0$).

2. An integrator according to claim 1, characterized in that it further comprises a second operator (2) identical with he first one, the circuit S (111) of which is looped back to the register X (103), and the circuits D (112 to 117) of which receive the same control signals as the first operator, that the signal to be integrated further includes n additional bits $M_p$ to $M_{p+n-1}$ applied to the input of the register RI (102) of the second operator, that the carry-over input of the second operator (2) is connected to the carry-over output of the first operator (1) and that the integrated signal further comprises n additional bits $I_n$ to $I_{2n-1}$ available at the output of the register X (103) of the second operator (2).

3. An integrator according to claim 2, characterized in that it further comprises a third and a fourth operator (3, 4) identical to the first operator, the circuits S (111) of which are looped back to the registers X (103) and the circuits D (112 to 117) of which receive the same control signals as the two first operators (1, 2), that each one of the operators further comprises a third register Y (101), that the registers Y of the first and the second operators are conceived to receive and to deliver with a delay of one clock period respectively n–2 additional bits $M_{2n}$ to $M_{3n-3}$ and $M_{3n-2}$ to $M_{4n-5}$ of the signal to be integrated, that the bits delivered by these registers Y are applied to the registers RI of the third and fourth operator (3, 4) with a wedging to the right and a quadruple copy of the bit of high weight, that the carry-over output of the second operator (2) is applied to one of the inputs of one of the registers Y of the third and fourth operators (3, 4), that the output of said register Y of said fourth operator (4) is applied to the carry-over input (110) of the third operator (3), that the carry-over input of the fourth operator (4) is connected to the carry-over output of the third operator (3) and that the integrated signal further comprises 2n additional bits $I_{2n}$ to $I_{3n-1}$ and $I_{3n}$ to $I_{4n-1}$ delivered at the next following clock period respectively at the output of the registers X (103) of the third and fourth operators (3, 4).

4. An integrator according to any one of claims 1 to 3, characterized in that n = 9.

Fig.1

0 122 843

1/2

Fig 2